Europäisches Patentamt

European Patent Office

Office européen des brevets

(11) Publication number: **0 164 432**
**B1**

(12) **EUROPEAN PATENT SPECIFICATION**

(45) Date of publication of patent specification: **03.02.88**

(21) Application number: **84106782.0**

(22) Date of filing: **14.06.84**

(51) Int. Cl.⁴: **F 16 B 15/06**

(54) **Twisted nail.**

(43) Date of publication of application:
**18.12.85 Bulletin 85/51**

(45) Publication of the grant of the patent:
**03.02.88 Bulletin 88/05**

(84) Designated Contracting States:
**AT BE DE FR GB NL SE**

(56) References cited:
**CH-A- 247 777**
**DE-C- 805 333**
**FR-A- 644 030**
**FR-A- 746 537**

(73) Proprietor: **WAKAI & CO. LTD.**
**2, Higashishimizu-cho Minami-ku Osaka-shi**
**Osaka 542 (JP)**

(72) Inventor: **Ikuta, Kazuichi**
**3-2, 2-chome, Morikawachinishi**
**Higashiosaka-shi Osaka (JP)**

(74) Representative: **Glawe, Delfs, Moll & Partner**
**Patentanwälte**
**Postfach 26 01 62 Liebherrstrasse 20**
**D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a twisted nail suitable in use for fixing a wooden plate or the like to fragile, porous and nonresilient material such as aerated concrete.

In recent years, aerated concrete has been in wide use as a wall material in building constructions. In this field, twisted nails are used to fix a wooden plate to aerated concrete wall since the aerated concrete is fragile, porous and nonresilient so that conventional straight nails are readily extracted from the aerated concrete.

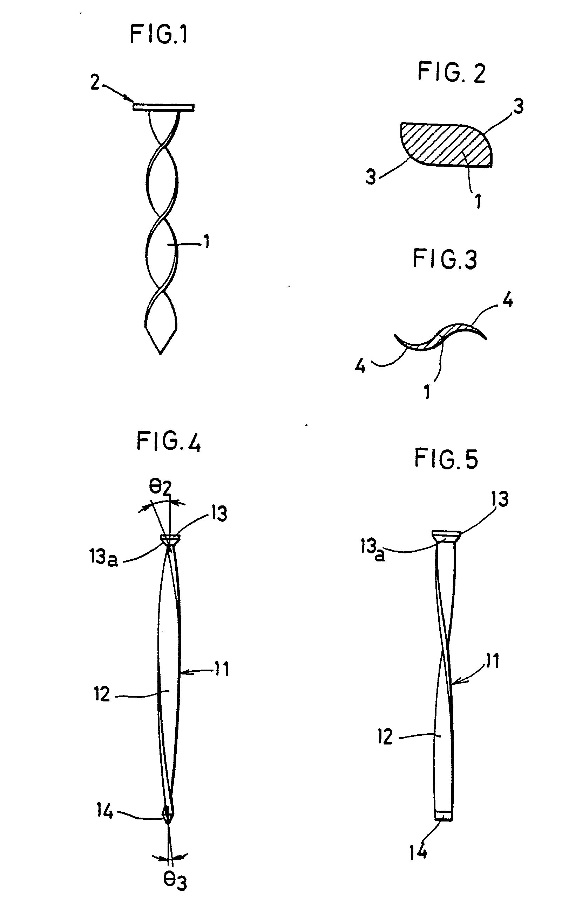

Fig. 1 shows a conventional twisted nail 2 in which a shank 1 is formed by twisting an elongated thin metal plate. However, there is a difficulty in the production of such a twisted nail. It is generally difficult to uniformly twist a metal plate over its entire length because of non-uniform hardness of the plate in the longitudinal direction. In more detail, harder portions of the plate are more difficult to be twisted than softer portions regardless of the working method used, so that the resulting twisted shank will have a non-uniform helix angle.

The non-uniform helix angle in the shank causes a change in the rotation of the shank when the nail is driven into the material, and the rotational change of the shank spreads the wall of the material mating with the shank, thus destroying the mating wall of the material. Thus, the conventional twisted nail hardly stands the extraction.

Furthermore, when the conventional nail is driven into aerated concrete, the lower helical faces of the shank necessarily press the mating wall of the material to form a gap between the upper helical faces of the shank and the mating wall. As a result, the twisted nail with a uniform helix angle is apt to get off the material when a slight extracting force happens to be applied to the nail at an early stage. This loosening at the early stage will be hereinafter referred to as the early loosening. In order to prevent the early loosening of the nail and the destruction of the mating wall of aerated concrete, other twisted nails have been proposed. Fig. 2 shows such a twisted nail in which a shank 1 has rounded corners 3 to come into a forcing contact with the mating wall of aerated concrete. Fig. 3 shows another twisted nail in which a shank 1 has arcuate surfaces 4. However, it is essential that these nails have a uniform helix angle over the entire length in order to be firmly fixed to aerated concrete without the early loosening and destruction of the mating wall.

Besides such twisted nails, there are also known a wood screw which has a round shank formed with a spirally extending sharp edge, and a metal screw nail which is formed by twisting a square wire. However, when these nails are driven into aerated concrete, the thick shank or the sharp edge destroy the mating wall of the aerated concrete, so that the loosening results. Namely, these nails are usable only to fix two wooden materials together.

It is an object of the present invention to provide a twisted nail which is capable of being firmly fixed to fragile and nonresilient material such as aerated concrete without the early loosening.

It is a further object of the invention to provide an improved twisted nail which can be readily produced by a conventional twisting method.

The twisted nail of the present invention comprises a shank made of a metal plate, the shank having a head at its one end and a tapered point at its other end, the shank being twisted between the ends so as to have a helix angle gradually increasing from the other end having the tapered point toward the one end having the head.

Further and more specific objects and advantages of the present invention are made apparent in the following specification with reference to the accompanying drawings, in which:

Fig. 1 is a front view of a conventional twisted nail;

Figs. 2 and 3 are sectional views of other conventional twisted nails;

Fig. 4 is a front view of a twisted nail embodying the invention;

Fig. 5 is a side view of the same;

Fig. 6 is a bottom view of the same;

Fig. 7 is a sectional view showing the nail being driven into aerated concrete through wooden material;

Fig. 8 is a transverse sectional view of the nail being driven in the concrete; and

Fig. 9 is a front view of another embodiment of the present invention.

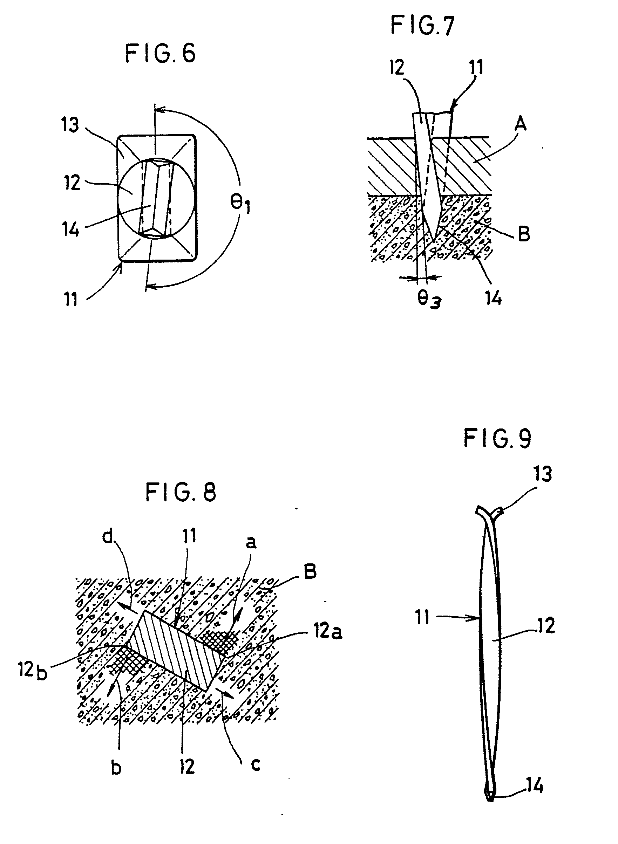

The twisted nail 11 of the present invention, as illustrated in the drawings, comprises a shank 12 made of a metal plate substantially rectangular in section, a head 13 at its one end and a tapered point 14 at its other end. The shank is twisted (as shown by $\theta_1$ in Fig. 6) between both ends with regard to its longitudinal axis wherein the helix angle is the smallest at the pointed end 14 and increases gradually toward the head. It may be the maximum just at the head or at a point slightly below the head.

The shank 12 is rectangular in section as illustrated in Fig. 8, but may be of any other shape. For example, the shank may be thicker at its central part into a diamond shape in section, or the shank may be cut off at the corners to have a round periphery in section. However, it is preferable that the shank is not less than 1.5 mm in thickness so that it has a satisfactory strength and it will not be bent when driven in the material to press effectively the mating wall of the material.

According to the present invention, the maximum helix angle $\theta_2$ at the upper end is preferably not more than 40°. The helix angle $\theta_3$ at the lower end is naturally smaller than $\theta_2$ and preferably not more than 18°. If a twisted nail with the helix angle $\theta_2$ of more than 40° is driven in the aerated concrete B through the wooden material A (Fig. 7), the working faces of the shank excessively press the mating wall of the wooden material to destroy the wall and produces a hole to allow the shank to rotate therein freely. Thus the working faces of the shank are prevented from close contact with the mating wall of the aerated concrete, and are then allowed to separate therefrom. As a result, the nail is allowed to be readily extracted from the concrete while rotating reversely. On the other hand, if a twisted nail with the helix angle $\theta_3$ of more than 18° is driven into aerated concrete, the shank rotates excessively in the material, and fails to exert a sufficient forcing compression to the mating wall of the material.

It is also preferable that the shank 12 has the lower end 14 so formed as to be tapered on one or both of the faces to prevent the cracking of wood material when the nail is driven in. However, the lower end may have all the side faces tapered. The tapering angle may be selected depending on the material to which the nail is applied. The shank itself may also be slightly tapered toward the lower end. The length, width, thickness, twist or helix angle, and tapering position at the lower end may be selected as desired.

The shank 12 may have a rectangular flat head 13 with its lower faces 13a tapered as illustrated in Figs. 4 and 5. Also the shank 12 may have a head 13 comprised of two portions extending in opposite directions from the upper end of the shank 12 as is shown in Fig. 9. Furthermore, the helix angle depends on the material to which the nail is applied. The twisted nail of the invention may be produced by twist working. Since the nail of the invention has a helix angle getting larger gradually from the lower end toward the upper end, it is readily produced by the twist method even if the metal plate used has a non-uniform hardness along the longitudinal direction.

The twisted nail of the present invention is suitable for use in fixing a wooden material A to, e.g. aerated concrete B, as shown in Fig. 7.

When the nail 11 is hammered into the wooden material A, the shank 12 is initially driven into the material with the driving angle substantially equal to an angle $\theta_3$ at the lower end of the shank 12. As the nail is driven in, the helix angle of the shank gradually increases from $\theta_3$ to $\theta_2$. As the driving angle becomes larger, the shank itself is forcibly twisted in the twisting direction of the shank, so that the working faces 12a and 12b of the shank are forced to press the mating wall of the aerated concrete in the direction a and b as illustrated in Fig. 8. This causes the compression of aerated concrete at portions shown by cross stripes, and results in close and forcing contact of the shank with the mating wall of the aerated concrete. The side faces also press the wall of the concrete mating therewith in the directions c and d although not so forcibly as the working faces, and come into close contact with the mating wall of the concrete. In this manner, the twisted nail 11 is forced to press the mating wall of aerated concrete to come into close contact therewith as the shank is driven in the concrete since the shank has a larger helix angle at the upper portion, thereby fixing the wooden material to the aerated concrete without the early loosening.

On the contrary to the above, if the nail with a uniform helix angle over its entire length is hammered into the material, a slight gap tends to form between the shank and the mating wall of the material. This gap, even if small, allows the nail to move upward when a slight extracting force happens to be applied to the nail, and consequently the nail only very loosely attaches to the material at the early stage.

However, according to the twisted nail of the invention, as set forth above, the shank presses the material in the directions a, b, c and d to result in a close contact therebetween, and therefore no gap is formed which causes the early loosening of the nail.

On the other hand, according to the twisted nail of the present invention, there is formed a gap between the faces of the shank opposite to its working faces and the concrete. This means that the twisted nail of the present invention is not formed so as to prevent loosening of the nail in the rotational direction. However, in practical fixing of a wooden material to aerated concrete, since the nails are hammered at a plurality of points at intervals along the longitudinal direction of the wooden material, no rotation of the wooden material occurs after the fixing, and hence the rotational loosening is not considered in the nail of the present invention. The twisted nail of the present invention has a shank so twisted as to have a helix angle gradually increasing over the entire length toward the upper end, whereby when driven in aerated concrete, the working faces of the shank are forced to press the mating wall of the concrete to come into close contact therewith, and no early loosening occurs.

As set forth above, the twisted nail of the present invention has a shank substantially rectangular in section, and the shank is twisted between both ends and has a helix angle gradually increasing toward the upper end. Thus, the working faces of the shank are forced to press the mating wall of material as the nail is driven therein to make close contact with the mating wall. Since in this manner the twisted nail of the present invention is capable of being firmly fixed in the material, the nail is suitable for fixing a wooden material to fragile, nonresilient and porous material such as aerated concrete without early loosening.

It is a further advantage of the nail of the present invention that the nail may be produced by a conventional twist working. Besides, since the twist angle of the nail gradually varies in the longitudinal direction, no precise twist working is needed, and even a metal platelet with non-uniform hardness may be formed into the nail of the present invention.

### Claims

1. A twisted nail comprising a shank made of a metal plate, said shank having a head at one end and a tapered point at the other end and being twisted over the entire length thereof, characterised in that the shank is twisted with a helix angle gradually increasing toward said one end having the head from said other end having the tapered point.

2. The twisted nail as claimed in claim 1 wherein the shank is not thinner than 1.5 mm.

3. The twisted nail as claimed in claim 1 wherein the shank has a helix angle not larger than 40° at said one end and not larger than 18° at said other end.

## Patentansprüche

1. Schraubnagel mit einem aus einem Metallstreifen gefertigten Schaft, welcher an einem Ende einen Kopf aufweist und am anderen Ende einen spitz zulaufenden Punkt, und welcher über seine gesamte Länge gewunden ist, dadurch gekennzeichnet, daß der Schaft gewunden ist mit einem Helixwinkel, der allmählich zunimmt vom Ende mit dem spitz zulaufenden Punkt zum Ende mit dem Kopf.

2. Schraubnagel nach Anspruch 1, dadurch gekennzeichnet, daß der Schaft nicht dünner als 1,5 mm ist.

3. Schraubnagel nach Anspruch 1, dadurch gekennzeichnet, daß der Schaft einen Helixwinkel hat, der nicht größer als 40° am einen Ende und nicht größer als 18° am anderen Ende ist.

## Revendications

1. Clou fileté comprenant une tige faite d'une bande métallique plate, ladite tige comportant une tête à une première extrémité et un bout pointu à l'autre extrémité et étant vrillée sur toute sa longueur, caractérisé en ce que la tige est vrillée suivant un angle d'hélice qui augmente progressivement vers ladite extrémité comportant la tête, à partir de ladite autre extrémité comportant le bout pointu.

2. Clou fileté suivant la revendication 1, dans lequel l'épaisseur de la tige n'est pas inférieure à 1,5 mm.

3. Clou fileté suivant la revendication 1, dans lequel l'angle d'hélice de la tige n'est pas supérieur à 40°, à ladite première extrémité, et n'est pas supérieur à 18°, à ladite autre extrémité.

0 164 432

FIG.1

FIG. 2

FIG.3

FIG.4

FIG.5

FIG. 6

FIG. 7

FIG. 8

FIG. 9